# EUROPEAN PATENT APPLICATION

(11) **EP 0 676 715 A2**
(43) Date of publication of application: **11.10.1995**
(21) Application number: 95200410.9
(22) Date of filing: 21.02.1995
(51) Int. Cl.: G06K 19/06

(54) **Identity card with optical memory**

(30) Priority: 06.04.1994 NL 9400539
(71) Applicant: DORNED B.V., NL-1016 AX Amsterdam (NL)
(72) Inventor: Kruithof, Willem Hendrik, NL-1016 AX Amsterdam (NL)
(74) Representative: Lips, Hendrik Jan George, Ir.

(57) **Abstract**

With a usual identity card, having a document layer (1), on which visible identification information is applied and, if desired, being provided with a magnetic strip, and said document layer being laminated between two layers of thermosetting plastic material (6, 9) being adhered on the document layer by thermoplastic adhesive material (4, 5, 8, 9), and with at least one of the coating layers being transparent, an optical data memory is laminated on at least one of the coating layers (6) and consists of a laser-optically writable and readable plastic layer (11), covered by a transparent layer of polycarbonate (12) and is adhered to the coating layer by a thermoplastic adhesive material (13). In this way, very extensive information can be added to the identity card in the form of data information applied by means of focussed laser irradiation, said information being readable. Moreover, this data information can comprise the visible data, including the passport photo, thereby providing a protection against falsification of these data.

## Description

The invention relates to an identity card having a document layer on which visible identification information is applied and, if desired, is provided with a magnetic strip, said document layer being laminated between two layers of thermosetting plastic material having been adhered onto the document layer by a first thermoplastic adhesive material, with at least one of the coating layers being transparent.

Identity cards of this type are generally known and are applied on a wide scale, e.g. as bank cards, credit cards, customer cards, member cards, passports, driver's licenses, and the like. On the one hand, the plastic lamination causes the visible information applied on the document layer to remain legible, and on the other hand represents a means of protection against falsification and malpractice.

Although, due to the plastic lamination, the risk of falsification of such an identity card is reduced considerably, it still remains existent, since in practice, it is possible to release the coating layers by means of e.g. a hot iron, causing the thermoplastic adhesive material to melt. Further, such identity cards have the disadvantage, that the amount of information such an identity card can contain is limited to written text, if necessary, a passport photo, and if desired the data applied on a magnetic strip, which limits the applications of such identity cards.

The object of the invention is to provide an identity card of the type described above, which offers the possibility of containing a very large amount of information, and at the same time represents an effective means against falsification of identity information.

To that end, the invention provides for an identity card as defined in the preamble, characterized in that on at least one of the coating layers, an optical data memory unit is laminated, comprising a laser-optically writable and readable plastic layer, covered by a transparent plastic layer of hard plastic, and being adhered to the coating layer by means of a second thermoplastic adhesive material.

Optical data memory units are known per se. These are applied in the form of CDs and for registrating patient information in hospitals, for example. However, the combination of an optical data memory unit and an identity card is unique.

This combination offers the possibility of adding to an identity card information in the form of data having a storage capacity in the order of several megabytes. This information can be applied with the help of a focussed laser beam being focussed through the coating layer onto the actual writing layer, in which the laser melts material point by point, said points being readable by laser scanning afterwards. The stored data can not be erased, but as long as the writing layer is not full, there is always the possibility of adding data to it.

For reading or writing the memory unit, one needs equipment, that can be compared to a CD-player as far as the costs and technique are concerned. Thus, a mobile version is one of the possibilities.

Efficiently, the embodiment can be such, that the laser-optically writable and readable plastic layer is transparent. This offers the advantage, that visible information can also be applied underneath the memory unit on the document layer.

According to a practical embodiment, there is only one optical data memory unit, and the visible information is applied on the document layer at the side turned away from the data memory unit. However, it is also possible to provide the document layer with visible information at two sides, in which case naturally the laser-optically writable and readable plastic layer should be transparent.

Owing to the large capacity of the memory unit, it is possible that the visible information on the document layer is also programmed in the data memory unit. In case the visible information on the document layer also comprise a passport photo, this too can be stored in data form in the data memory unit. In this way, an excellent guarantee against falsification of visible information is provided for.

A further possibility against falsification is represented by an embodiment in which the first thermoplastic adhesive material, by which the coating layers have been laminated on the document layer, has a noticeable higher softening temperature than the second thermoplastic adhesive material, by which the memory unit is laminated. Through this, it is achieved, that if a person, in an attempt at falsification, tries to delaminate the identity card, he will in any case permanently damage the memory unit while trying to expose the visible information, so that it will always be clear when falsification has taken place.

Apart from the normal use as identity card, the combination according to the invention offers the ability of containing numerous registrations. Examples are registrations of obtained results (exams, tests, experiments), budget carrier, guidance and registration of production processes and transport streams, storage preparation, technical descriptions, tachograph, lending card (library and videotheque); storage part list for various equipment, etc.

The identity card according to the invention further offers the possibility of faultless registration of transactions without an on-line connection with a computer and/or displacement of persons or goods. To that end, stand-alone operating registration equipment can be used. All relevant data are recorded on the card and thus need not be verified by a centrally controlled directory. Reading the registered data from the card directly into the computer directory is also possible.

The invention will now be explained further by way of an embodiment with reference to the drawing. In the drawing:
Fig. 1 diagrammatically shows an embodiment of an identity card according to the invention in section along the line A-A of Fig. 2; and
Fig. 2 shows the identity card according to Fig. 1 in plan view.

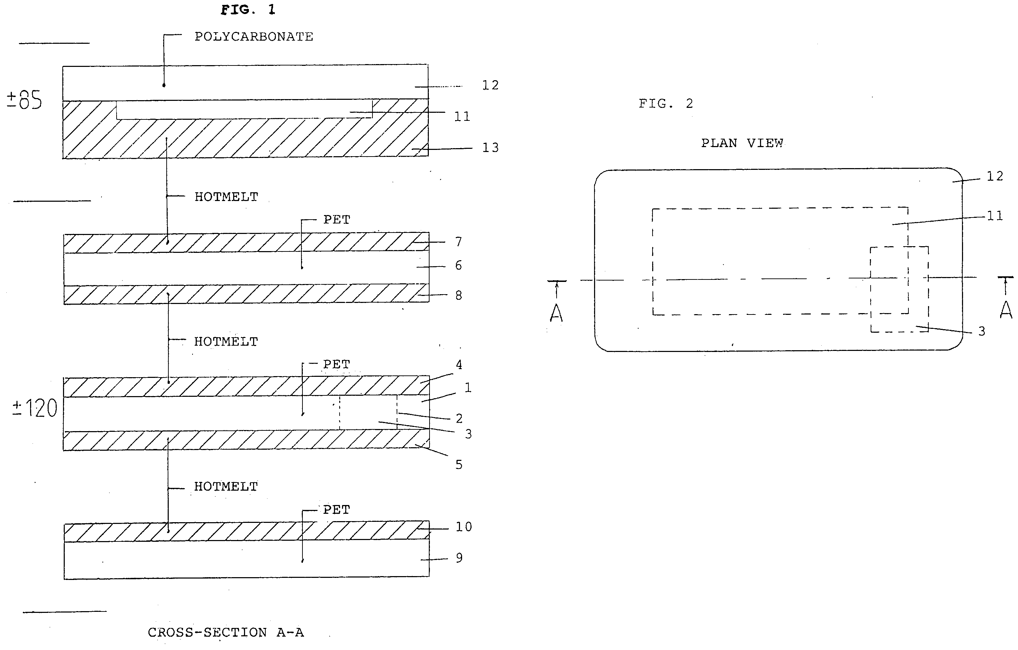

The identity card according to the invention, as shown in Fig. 1, substantially comprises four units, which are laminated onto each other.

The first unit is represented by a document layer 1 of PET, for example. This document layer 1 is provided with a photo window 2 for inlay of a passport photo 3. At its top and bottom side, the document layer 1 is covered by a hotmelt layer 4 and 5, respectively.

The second unit is represented by an upper coating layer 6 of PET, with identification information being applied at its bottom side. At top side and bottom side, coating layer 6 is covered by a hotmelt layer 7 and 8, respectively, the visible identification information being applied on the layer 8.

The third unit consists of a lower coating layer 9, provided with a hotmelt layer 10, and, if necessary, provided with a magnetic strip (not shown).

If the above three units are laminated onto each other in the order indicated, with the help of a heated roller pair, a usual identification card is obtained.

According to the invention, a fourth unit has been laminated onto the upper coating layer 6. This fourth unit is a data memory unit consisting of a thermoplastic memory layer 11, in which pits can be engraved according to a desired pattern with the help of a focussed laser beam. This thermoplastic memory layer is covered by a coating layer 12 of transparent polycarbonate. At the bottom side of the memory layer, and completely enclosing it, a hotmelt layer 13 was applied. By laminating this memory unit along with the other units in the order shown in fig. 1, one obtains an identity card, which, apart from the usual information, has a data memory in which a very large amount of data in bit-form can be stored at a high information density (storage capacity approximately 4 Mb). Even when the identity card is already in use, this data memory can be written into, or be extended with additional information, that can be read at all times with the help of suitable laser reading apparatus.

In this way, there is the possibility of providing the identity card with all sorts of additional data, such as registrations (exams, tests, experiments, production processes, transport streams, dispensings, technical descriptions, etc.). It is also possible to use an identity card as a tachograph, in which case the truck in which this tachograph is being used, is provided with suitable laser equipment. This laser equipment, by which data are written, and possibly read, is principally of the same type as that being used for CD-players, and therefore applicable in a mobile form.

Further, the identification data, visibly applied on the document layer 1, as well as the passport photo 3, can be very efficiently incorporated on the memory layer 11 in code form. Due to this, the identity card is given an additional safety aspect, since, should somebody succeed in falsifying the passport photo, for example, with a laser check it would turn out, that the passport photo had indeed been falsified.

Another safety aspect can be provided, in that the hotmelt layers, by which the document layer 1, the upper coating layer 6 and the lower coating layer 9 are laminated to each other, have a temperature of ± 120°C, whereas the hotmelt layer 13 of the memory unit has a lower melting point (± 85°C). If one wishes to delaminate a laminated identity card, releasing the coating layers from the document layer will require a delamination temperature that is so high, that the hotmelt layer laminated on the memory unit will decompose and disform, so that afterwards it is clearly visible that falsification has taken place.

In the above, the invention has been explained by way of an embodiment. However, it will be clear that there are numerous variations possible. Thus, it is possible, among other things, to apply a memory unit on the bottom side (in which case the memory layer itself should also be transparent), instead of on the top side, or even to apply memory units on both sides.

Further modifications and variations will be obvious to the expert.

## Claims

1. Identity card having a document layer on which visible identification information is applied and, if desired, is provided with a magnetic strip, said document layer being laminated between two layers of thermosetting plastic material having been adhered onto the document layer by a first thermoplastic adhesive material, with at least one of the coating layers being transparent, characterized in that on at least one of the coating layers, an optical data memory unit is laminated, comprising a laser-optically writable and readable plastic layer, covered by a transparent plastic layer of hard plastic, and being adhered to the coating layer by means of a second thermoplastic adhesive material.

2. Identity card according to claim 1, characterized in that the laser-optically writable and readable plastic layer is transparent.

3. Identity card according to claim 1 or 2, characterized in that theme is only one optical data memory unit, and that the visible information is applied on the document layer on the side turned away from the data memory unit.

4. Identity card according to one or more of the preceding claims, characterized in that the visible information on the document layer is also programmed in the memory unit.

5. Identity card according to claim 4, characterized in that the visible data on the document layer comprise a passport photo being stored in data form in the data memory unit as well.

6. Identity card according to one or more of the preceding claims, characterized in that the first thermoplastic adhesive material has a noticeably higher softening temperature than the second thermoplastic adhesive material.
